(19) Europäisches Patentamt
European Patent Office
Office européen des brevets

(11) EP 3 139 598 B1

(12) EUROPEAN PATENT SPECIFICATION

(45) Date of publication and mention of the grant of the patent:
**06.05.2020 Bulletin 2020/19**

(21) Application number: **14851430.0**

(22) Date of filing: **31.10.2014**

(51) Int Cl.:
***H04N 9/31*** *(2006.01)* ***G03B 21/00*** *(2006.01)*

(86) International application number:
**PCT/CN2014/090022**

(87) International publication number:
**WO 2015/165231 (05.11.2015 Gazette 2015/44)**

(54) **WEARABLE PROJECTION DEVICE AND PROJECTION METHOD**

TRAGBARE PROJEKTIONSVORRICHTUNG UND PROJEKTIONSVERFAHREN

DISPOSITIF DE PROJECTION PORTABLE ET PROCÉDÉ DE PROJECTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2014 CN 201410175568**

(43) Date of publication of application:
**08.03.2017 Bulletin 2017/10**

(73) Proprietor: **BOE Technology Group Co., Ltd.**
**Beijing 100015 (CN)**

(72) Inventors:
- **CHEN, Yanshun**
  **Beijing 100176 (CN)**
- **ZHAO, Xingxing**
  **Beijing 100176 (CN)**
- **XU, Qiushi**
  **Beijing 100176 (CN)**
- **LI, Yaohui**
  **Beijing 100176 (CN)**

(74) Representative: **Klunker IP Patentanwälte PartG mbB**
**Destouchesstraße 68**
**80796 München (DE)**

(56) References cited:
**CN-A- 101 461 147**
**CN-A- 102 244 757**
**CN-A- 103 974 049**
**US-A1- 2002 024 640**
**US-A1- 2004 140 982**
**US-A1- 2009 295 712**
**US-A1- 2009 295 712**
**US-A1- 2010 199 232**
**US-A1- 2013 086 531**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The invention relates to a wearable projection apparatus and a projection method.

BACKGROUND

A wearable projection apparatus employs a hand as a projection screen.

However, shapes, palmprints and colors of hands of different users are quite different, as shown in FIG. 1, when an image is projected by a wearable projection apparatus 02, a projection angle between light emitted from the wearable projection apparatus 02 and a hand 01 is relatively small, and an angle difference between a nearest point and a farthest point of the light emitted from the wearable projection apparatus 02 is great; moreover, when the light emitted from the wearable projection apparatus 02 is to display an image on the hand 01, widths of parts located on both sides of a centerline, L1 and L2, are different, resulting in poor uniformity in color and brightness of the image projected on the hand.

US 2009/295712 A1 discloses a portable projector comprising a projection unit for projecting an image onto a projection surface, a stabilization unit for stabilizing the projecting of the image, and a light sensing unit for scanning a region surrounding the portable projector.

US 2004/140982 A1 discloses a method of projecting a compensated principal image, which may include projecting a principal image onto a surface and projecting an intended calibration image onto a calibration area of the surface, wherein the intended calibration image is projected when the principal image is not projected onto the calibration area, the calibration image displayed on the surface is received and compared to the intended calibration image to determine an observed difference, and the projection of the principal image is modified based on the observed difference.

US 2002/024640 A1 discloses projecting a large seamless screen using multiple projectors, wherein - though the projection screen has any surface whatever - geometric distortion, color irregularity, and shading in the projected images is compensated. Accordingly, image data from an input terminal is divided by an input image divider in accordance with the projectors. The divided image data is subjected to compensation processing by an image compensator, using compensation data for the respective characteristics of the various types of output characteristics. In the image compensator at least one of color difference compensation, geometric compensation, color irregularity compensation, shading compensation, bias compensation, and gamma compensation is performed. The output characteristics are subjected to compensation processing using the compensation data for the various types of output characteristics stored in a compensation data memory unit. The image data for each projector subjected to compensation processing, after D/A conversion, is sent to the respective projectors.

US 2013/086531 A1 discloses a command issuing device including an acquiring unit acquiring a moving image by capturing a hand of an operator; a projection area recognizer recognizing a projection area of a projection finger in the moving image; a projector projecting pictures of a graphical user interface (GUI) onto the projection area; an operation area recognizer recognizing an operation area of an operation finger in the moving image; a selection determining unit measuring an overlapping degree of the projection area and the operation area to determine whether or not the GUI is selected; and a issuing unit issuing a command associated with the GUI when it is determined that the GUI is selected.

SUMMARY OF THE INVENTION

It is an object of the present invention tp provide a wearable projection apparatus and a projection method, whereby the wearable projection apparatus may form an image with relatively high uniformity in color and brightness, when projecting the image on a hand by using the projection method.

The object is achieved by the features of the respective independent claims. Further embodiments and developments are defined in the dependent claims.

BRIEF DESCRIPTION OF THE DRAWINGS

In order to clearly illustrate the technical solution of the embodiments of the invention, the drawings of the embodiments will be briefly described in the following; it is obvious that the described drawings are only related to some embodiments of the invention and thus are not limitative of the invention.

FIG. 1 is a schematic diagram of a wearable projection apparatus when projecting an image on a hand; and

FIG. 2 is another schematic diagram of a wearable projection apparatus when projecting an image on a hand.

DESCRIPTION OF THE EMBODIMENTS

In order to make objects, technical details and advantages of the embodiments of the invention apparent, the technical solutions of the embodiment will be described in a clearly and fully understandable way in connection with the drawings related to the embodiments of the invention.

An embodiment of the present invention provides a projection method of a wearable projection apparatus, the projection method comprising: step S201: acquiring color distribution information and brightness distribution information of a plurality of regions of a hand;

Step S202: determining modified color output parameters according to the acquired color distribution information of the regions of the hand and preset standard color information, and determining modified brightness output parameters according to the acquired brightness distribution information of the regions of the hand;
Step S203: controlling a projection module to output an image according to the determined color output parameters and the determined brightness output parameters.

Exemplarily, in the embodiment of the present invention, the preset standard color information is a display standard of a display system, for example, a general PC system uses an sRGB standard, and a TV system uses a NTSC standard.

In the projection method of the wearable projection apparatus as described above, before the projection is started, the color distribution information and the brightness distribution information of the regions of the hand are acquired at first in step S201; and then the modified color output parameters are determined according to the acquired color distribution information, and the modified brightness output parameters are determined according to the acquired brightness distribution information of the regions of the hand in step S202; and finally the projection module of the wearable projection apparatus is controlled to output an image according to the determined color output parameters and the determined brightness output parameters in step S203.

Therein, in the image output parameters finally determined, influence of the hand color on the image projected by the wearable projection apparatus on the hand is adjusted, so that the image projected by the wearable projection apparatus on the hand can have relatively high uniformity in color and brightness.

Exemplarily, in the step S201 as described above, the acquiring color distribution information and brightness distribution information of the regions of the hand includes:

Acquiring RGB pattern information of the regions of the hand;
Determining the color distribution information and brightness distribution information of the regions of the hand according to the acquired RGB pattern information of the regions of the hand; converting the acquired RGB pattern information into YUV format information, thus to determine the color distribution information and the brightness distribution information of the regions of the hand.

Exemplarily, in the step S202 as described above, the determining modified color output parameters according to the acquired color distribution information of the regions of the hand and preset standard color information, includes: Determining a reference color value according to the acquired color distribution information of the regions of the hand, and determining the modified color output parameters according to the determined reference color value, the preset standard color information and the determined color distribution information of the regions of the hand.

Exemplarily, the reference color value is an average value of color informations of all colors of a central region of the hand.

Exemplarily, the determining the modified color output parameters according to the determined reference color value, the preset standard color information and the determined color distribution information of the regions of the hand, can be calculated by formulae as follows:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

where, $U'(x,y)$ is a modified red tone output parameter, $V'(x,y)$ is a modified blue tone output parameter, $U(x,y)$ is red tone information in the color distribution information of the regions of the hand, $V(x,y)$ is blue tone information in the color distribution information of the regions of the hand, $U_S$ is red tone information in the preset standard color information,

$U_0$ is a red tone value in the determined reference color value, $V_s$ is blue tone information in the preset standard color information, $V_0$ is a blue tone value in the determined reference color value, and x and y are coordinates of a certain point on the hand.

Exemplarily, in the step S202 as described above, the determining modified brightness output parameters according to the acquired brightness distribution information of the regions of the hand, includes:

Determining brightness correction factors of the regions of the hand according to the acquired brightness distribution information of the regions of the hand, and determining the modified brightness output parameters according to the brightness correction factors of the regions and the determined brightness distribution information of the regions of the hand.

Exemplarily, the determining the modified brightness output parameters according to the brightness correction factors of the regions and the determined brightness distribution information of the regions of the hand can be calculated by formulae as follows:

$$Hand(x,y) = {Y(x,y)}/{Y(\max)}$$

$$Y'(x,y) = Y(x,y) \times Hand(x,y)$$

where, $Y'(x,y)$ is the modified brightness output parameter, $Y(x,y)$ is the brightness distribution information of the regions of the hand, $Hand(x,y)$ is the brightness correction factor, $Y(\max)$ is a highest brightness value in the brightness distribution information of the regions of the hand, and x and y are the coordinates of a certain point on the hand.

Exemplarily, the determining the modified brightness output parameters according to the brightness correction factors of the regions and the determined brightness distribution information of the regions of the hand can be calculated by formulae as follows:

$$Y' = Y * \partial$$

$$\partial = (\mathrm{atan}\frac{\mathrm{h} * \tan\theta_0 - \frac{L}{N} * (\frac{\mathrm{N}}{2} - i)}{h} - \mathrm{atan}\frac{\mathrm{h} * \tan\theta_0 - \frac{L}{N} * (\frac{\mathrm{N}}{2} - i + 1)}{h}) / (\varphi / N)$$

where, $Y'$ is the modified brightness output parameter; $Y$ is the brightness distribution information of the regions of the hand; $\partial$ is the brightness correction factor, as shown in FIG. 2, h is a distance from a center of a light outgoing surface of the projection apparatus 2 to the hand 1; $\varphi$ is a light outgoing angle of the light outgoing surface of the projection apparatus 2; $\theta_0$ is an angle between a centerline of the light outgoing angle of the light outgoing surface of the projection apparatus 2 and the hand 1; $L$ is a length of a projection region on the hand 1 of the projection apparatus 2 from an end close to the projection apparatus 2 to an end away from the projection apparatus 2; $N$ is a total number of pixel rows of the projection region on the hand 1 of the projection apparatus 2 in a direction from the end close to the projection apparatus 2 to the end away from the projection apparatus 2; $i$ is a row number of a certain pixel in the projection region on the hand 1 of the projection apparatus 2 in the direction from the end close to the projection apparatus 2 to the end away from the projection apparatus 2.

An embodiment of the present invention further provides a wearable projection apparatus, comprising:

An acquisition device, configured to acquire pattern information of a plurality of regions of a hand;

A processing unit, configured to be in signal connection with the acquisition device and acquire color distribution information and brightness distribution information of the regions of the hand according to the pattern information of the regions of the hand acquired by the acquisition device, determining modified color output parameters according to the acquired color distribution information of the regions of the hand and a preset standard color information, and determining modified brightness output parameters according to the acquired brightness distribution information of the regions of the hand;

A projection module, configured to output an image according to the determined color output parameters and the determined brightness output parameters.

Exemplarily, the above-described acquisition device is an RGB camera, having a light-collecting direction in parallel with a light outgoing direction of the projection module.

For the projection method of the wearable projection apparatus and the wearable projection apparatus according to embodiments of the present invention, the projection module of the wearable projection apparatus is controlled according to the modified color output parameters and the modified brightness output parameters to output an image, thereby correcting influence of the hand color on the image projected by the wearable projection apparatus on the hand, and correcting influence of reflectivity and projection angle of different regions of the hand on the image projected by the wearable projection apparatus on the hand, so that the image projected by the wearable projection apparatus on the hand can have higher uniformity in color and brightness.

## Claims

**1.** A projection method of a wearable projection apparatus (2), comprising:

(S201) acquiring color distribution information and brightness distribution information of a plurality of regions of a hand (1);
(S202) determining a reference color value according to the acquired color distribution information of the regions of the hand, determining modified color output parameters according to the determined reference color value, the acquired color distribution information of the regions of the hand (1) and preset standard color information, determining brightness correction factors of the regions of the hand according to the acquired brightness distribution information of the regions of the hand, and determining modified brightness output parameters according to the brightness correction factors and the acquired brightness distribution information of the regions of the hand (1);
(S203) controlling a projection module to output an image according to the determined color output parameters and the determined brightness output parameters, wherein
determining the modified color output parameters according to the determined reference color value, the preset standard color information and the determined color distribution information of the regions of the hand (1), is performed by calculating using formulae as follows:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

where, $U'(x,y)$ is a modified red tone output parameter; $V'(x,y)$ is a modified blue tone output parameter; $U(x,y)$ is red tone information in the color distribution information of the regions of the hand (1); $V(x,y)$ is blue tone information in the color distribution information of the regions of the hand (1); $U_s$ is red tone information in the preset standard color information; $U_0$ is a red tone value in the determined reference color value; $V_s$ is blue tone information in the preset standard color information; and $V_0$ is a blue tone value in the determined reference color value; and
determining the modified brightness output parameters according to the brightness correction factors of the regions and the determined brightness distribution information of the regions of the hand (1) is performed by calculating using formulae as follows:

$$Hand(x,y) = Y(x,y) / Y(\max)$$

$$Y'(x,y) = Y(x,y) \times Hand(x,y)$$

where $Y'(x,y)$ is the modified brightness output parameter; $Y(x,y)$ is the brightness distribution information of the regions of the hand (1); $Hand(x,y)$ is the brightness correction factor; and $Y(\max)$ is a highest brightness value in the brightness distribution information of the regions of the hand (1).

**2.** The projection method according to claim 1, wherein the acquiring color distribution information and brightness distribution information of the regions of a hand (1), comprises:

acquiring RGB pattern information of the regions of the hand (1);
determining the color distribution information and the brightness distribution information of the regions of the hand (1) according to the acquired RGB pattern information of the regions of the hand (1).

**3.** The projection method according to claim 1, wherein the reference color value is an average value of color information of all colors in a central region of the hand (1).

**4.** A projection method of a wearable projection apparatus (2), comprising:

(S201) acquiring color distribution information and brightness distribution information of a plurality of regions of a hand (1);
(S202) determining a reference color value according to the acquired color distribution information of the regions of the hand, determining modified color output parameters according to the determined reference color value, the acquired color distribution information of the regions of the hand (1) and preset standard color information, determining brightness correction factors of the regions of the hand according to the acquired brightness distribution information of the regions of the hand, and determining modified brightness output parameters according to the brightness correction factors and the acquired brightness distribution information of the regions of the hand (1);
(S203) controlling a projection module to output an image according to the determined color output parameters and the determined brightness output parameters, wherein
determining the modified color output parameters according to the determined reference color value, the preset standard color information and the determined color distribution information of the regions of the hand (1), is performed by calculating using formulae as follows:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

where, $U'(x,y)$ is a modified red tone output parameter; $V'(x,y)$ is a modified blue tone output parameter; $U(x,y)$ is red tone information in the color distribution information of the regions of the hand (1); $V(x,y)$ is blue tone information in the color distribution information of the regions of the hand (1); $U_S$ is red tone information in the preset standard color information; $U_0$ is a red tone value in the determined reference color value; $V_s$ is blue tone information in the preset standard color information; and $V_0$ is a blue tone value in the determined reference color value; and
determining the modified brightness output parameters according to the brightness correction factors of the regions and the determined brightness distribution information of the regions of the hand (1) is performed by calculating using formulae as follows:

$$Y' = Y * \partial$$

$$\partial = (\text{atan}\frac{\text{h} * \tan\theta_0 - \frac{L}{N} * (\frac{\text{N}}{2} - i)}{h} - \text{atan}\frac{\text{h} * \tan\theta_0 - \frac{L}{N} * (\frac{\text{N}}{2} - i + 1)}{h}) / (\varphi / N)$$

where, *Y'* is the modified brightness output parameters; *Y* is the brightness distribution information of the regions of the hand (1); $\partial$ is the brightness correction factor; h is a distance from a center of a light outgoing surface of the projection apparatus (2) to the hand (1); $\varphi$ is a light outgoing angle of the light outgoing surface of the projection apparatus (2); $\theta_0$ is an angle between a centerline of the light outgoing angle of the light outgoing surface of the projection apparatus (2) and the hand (1); *L* is a length of a projection region on the hand (1) of the projection apparatus (2) from an end close to the projection apparatus (2) to an end away from the projection apparatus (2); *N* is a total number of pixel rows of the projection region on the hand (1) of the projection apparatus (2) in a direction from the end close to the projection apparatus (2) to the end away from the projection apparatus (2); *i* is a row number of a certain pixel in the projection region on the hand (1) of the projection apparatus (2) in the direction from the end close to the projection apparatus (2) to the end away from the projection apparatus (2).

**5.** The projection method according to claim 4, wherein the acquiring color distribution information and brightness distribution information of the regions of a hand (1), comprises:

acquiring RGB pattern information of the regions of the hand (1);
determining the color distribution information and the brightness distribution information of the regions of the hand (1) according to the acquired RGB pattern information of the regions of the hand (1).

**6.** The projection method according to claim 4, wherein the reference color value is an average value of color information of all colors in a central region of the hand (1).

**7.** A wearable projection apparatus (2), comprising:

an acquisition device, configured to acquire pattern information of a plurality of regions of a hand (1);
a processing unit, configured to be in signal connection with the acquisition device and acquire color distribution information and brightness distribution information of the regions of the hand according to the pattern information of the regions of the hand (1) acquired by the acquisition device, determine a reference color value according to the acquired color distribution information of the regions of the hand, determine modified color output parameters according to the determined reference color value, the acquired color distribution information of the regions of the hand (1) and the preset standard color information, determine brightness correction factors of the regions of the hand according to the acquired brightness distribution information of the regions of the hand, and determine modified brightness output parameters according to the brightness correction factors and the acquired brightness distribution information of the regions of the hand (1);
a projection module, configured to output an image according to the determined color output parameters and the determined brightness output parameters, wherein
determining the modified color output parameters according to the determined reference color value, the preset standard color information and the determined color distribution information of the regions of the hand (1), is performed by calculating using formulae as follows:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

where, *U'*(*x*,*y*) is a modified red tone output parameter; *V'*(*x*,*y*) is a modified blue tone output parameter; *U*(*x*, *y*) is red tone information in the color distribution information of the regions of the hand; *V*(*x*,*y*) is blue tone information in the color distribution information of the regions of the hand; $U_s$ is red tone information in the preset standard color information; $U_0$ is a red tone value in the determined reference color value; $V_s$ is blue tone

information in the preset standard color information; and $V_0$ is a blue tone value in the determined reference color value; and

determining the modified brightness output parameters according to the brightness correction factors of the regions and the determined brightness distribution information of the regions of the hand is performed by calculating using formulae as follows:

$$Hand(x,y) = Y(x,y) / Y(\max)$$

$$Y'(x,y) = Y(x,y) \times Hand(x,y)$$

where $Y'(x,y)$ is the modified brightness output parameter; $Y(x,y)$ is the brightness distribution information of the regions of the hand (1); $Hand(x,y)$ is the brightness correction factor; and $Y(\max)$ is a highest brightness value in the brightness distribution information of the regions of the hand (1).

**8.** The wearable projection apparatus (2) according to claim 7, wherein the acquisition device is an RGB camera, having a light-collecting direction in parallel with a light-outgoing direction of the projection module.

**9.** A wearable projection apparatus (2), comprising:

an acquisition device, configured to acquire pattern information of a plurality of regions of a hand (1);

a processing unit, configured to be in signal connection with the acquisition device and acquire color distribution information and brightness distribution information of the regions of the hand (1) according to the pattern information of the regions of the hand (1) acquired by the acquisition device, determine a reference color value according to the acquired color distribution information of the regions of the hand, determine modified color output parameters according to the determined reference color value, the acquired color distribution information of the regions of the hand (1) and the preset standard color information, determine brightness correction factors of the regions of the hand according to the acquired brightness distribution information of the regions of the hand, and determine modified brightness output parameters according to the brightness correction factors and the acquired brightness distribution information of the regions of the hand (1);

a projection module, configured to output an image according to the determined color output parameters and the determined brightness output parameters, wherein

determining the modified color output parameters according to the determined reference color value, the preset standard color information and the determined color distribution information of the regions of the hand (1), is performed by calculating using formulae as follows:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

where, $U'(x,y)$ is a modified red tone output parameter; $V'(x,y)$ is a modified blue tone output parameter; $U(x,y)$ is red tone information in the color distribution information of the regions of the hand (1); $V(x,y)$ is blue tone information in the color distribution information of the regions of the hand (1); $U_s$ is red tone information in the preset standard color information; $U_0$ is a red tone value in the determined reference color value; $V_s$ is blue tone information in the preset standard color information; and $V_0$ is a blue tone value in the determined reference color value; and

determining the modified brightness output parameters according to the brightness correction factors of the regions and the determined brightness distribution information of the regions of the hand (1) is performed by calculating using formulae as follows:

$$Y' = Y * \partial$$

$$\partial = (\text{atan}\frac{h * \tan\theta_0 - \frac{L}{N} * (\frac{N}{2} - i)}{h} - \text{atan}\frac{h * \tan\theta_0 - \frac{L}{N} * (\frac{N}{2} - i + 1)}{h}) / (\varphi / N)$$

where, *Y'* is the modified brightness output parameters; *Y* is the brightness distribution information of the regions of the hand (1); $\partial$ is the brightness correction factor; h is a distance from a center of a light outgoing surface of the projection apparatus (2) to the hand (1); $\varphi$ is a light outgoing angle of the light outgoing surface of the projection apparatus (2); $\theta_0$ is an angle between a centerline of the light outgoing angle of the light outgoing surface of the projection apparatus (2) and the hand (1); *L* is a length of a projection region on the hand (1) of the projection apparatus (2) from an end close to the projection apparatus (2) to an end away from the projection apparatus (2); *N* is a total number of pixel rows of the projection region on the hand (1) of the projection apparatus (2) in a direction from the end close to the projection apparatus (2) to the end away from the projection apparatus (2); *i* is a row number of a certain pixel in the projection region on the hand (1) of the projection apparatus (2) in the direction from the end close to the projection apparatus (2) to the end away from the projection apparatus (2).

**10.** The wearable projection apparatus (2) according to claim 9, wherein the acquisition device is an RGB camera, having a light-collecting direction in parallel with a light-outgoing direction of the projection module.

**Patentansprüche**

**1.** Projektionsverfahren einer tragbaren Projektionsvorrichtung (2) mit:

(S201) Erfassen von Informationen zur Farbverteilung und Informationen zur Helligkeitsverteilung einer Vielzahl von Regionen einer Hand (1);
(S202) Bestimmen eines Referenzfarbwerts gemäß den erfassten Informationen zur Farbverteilung der Regionen der Hand, Bestimmen modifizierter Farbausgabeparameter gemäß dem bestimmten Referenzfarbwert, den erfassten Informationen zur Farbverteilung der Regionen der Hand (1) und voreingestellter Standard-Farbinformationen, Bestimmen von Helligkeitskorrekturfaktoren der Regionen der Hand gemäß den erfassten Informationen zur Helligkeitsverteilung der Regionen der Hand, und Bestimmen modifizierter Helligkeitsausgabeparameter gemäß den Helligkeitskorrekturfaktoren und den erfassten Informationen zur Helligkeitsverteilung der Regionen der Hand (1);
(203) Steuern eines Projektionsmoduls, um ein Bild gemäß den bestimmten Farbausgabeparametern und den bestimmten Helligkeitsausgabeparametern auszugeben,
wobei
Bestimmen der modifizierten Farbausgabeparameter gemäß dem bestimmten Referenzfarbwert, der voreingestellten Standard-Farbinformationen und der bestimmten Informationen zur Farbverteilung der Regionen der Hand (1) durch Berechnen unter Verwendung folgender Formeln durchgeführt wird:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

wobei, *U'(x, y)* ein modifizierter Rotton-Ausgabeparameter ist; *V'(x,y)* ein modifizierter Blauton-Ausgabeparameter ist; *U(x, y)* eine Rotton-Information in den Informationen zur Farbverteilung der Regionen der Hand (1) ist; *V(x, y)* eine Blauton-Information in den Informationen zur Farbverteilung der Regionen der Hand (1) ist; $U_s$ eine Rotton-Information in den voreingestellten Standard-Farbinformationen ist; $U_0$ ein Rotton-Wert in dem bestimmten Referenz-Farbwert ist; $V_s$ eine Blauton-Information in den voreingestellten Standard-Farbinformationen ist; und $V_0$ ein Blauton-Wert in dem bestimmten Referenz-Farbwert ist; und
Bestimmen der modifizierten Helligkeitsausgabeparameter gemäß den Helligkeitskorrekturfaktoren der Regionen und den bestimmten Informationen zur Helligkeitsverteilung der Regionen der Hand (1) durch Berechnen unter Verwendung von folgenden Formeln durchgeführt wird:

$$Hand(x,y) = Y(x,y) / Y(\max)$$

$$Y'(x,y) = Y(x,y) \times Hand(x,y)$$

wobei *Y'(x, y)* der modifizierte Helligkeitsausgabeparameter ist; *Y(x, y)* die Informationen zur Helligkeitsverteilung der Regionen der Hand (1) sind; *Hand(x, y)* der Helligkeitskorrekturfaktor ist; und *Y(max)* ein höchster Helligkeitswert in den Informationen zur Helligkeitsverteilung der Regionen der Hand (1) ist.

**2.** Projektionsverfahren gemäß Anspruch 1, wobei das Erfassen von Informationen zur Farbverteilung und Informationen zur Helligkeitsverteilung einer Hand (1) aufweist:

Erfassen von RGB-Musterinformationen der Regionen der Hand (1);
Bestimmen der Informationen zur Farbverteilung und der Informationen zur Helligkeitsverteilung der Regionen der Hand (1) gemäß den erfassten RGB-Musterinformationen der Regionen der Hand (1).

**3.** Projektionsverfahren gemäß Anspruch 1, wobei der Referenzfarbwert ein Durchschnittswert von Farbinformationen aller Farben in einer Zentralregion der Hand (1) ist.

**4.** Projektionsverfahren einer tragbaren Projektionsvorrichtung (2) mit:

(S201) Erfassen von Informationen zur Farbverteilung und Informationen zur Helligkeitsverteilung einer Vielzahl von Regionen einer Hand (1);
(S202) Bestimmen eines Referenzfarbwerts gemäß den erfassten Informationen zur Farbverteilung der Regionen der Hand, Bestimmen modifizierter Farbausgabeparameter gemäß dem bestimmten Referenzfarbwert, der erfassten Informationen zur Farbverteilung der Regionen der Hand (1) und voreingestellter Standard-Farbinformationen, Bestimmen von Helligkeitskorrekturfaktoren der Regionen der Hand gemäß den erfassten Informationen zur Helligkeitsverteilung der Regionen der Hand, und Bestimmen modifizierter Helligkeitsausgabeparameter gemäß den Helligkeitskorrekturfaktoren und den erfassten Informationen zur Helligkeitsverteilung der Regionen der Hand (1);
(S203) Steuern eines Projektionsmoduls, um ein Bild gemäß den bestimmten Farbausgabeparametern und den bestimmten Helligkeitsausgabeparametern anzuzeigen,
wobei
Bestimmen der modifizierten Farbausgabeparameter gemäß dem bestimmten Referenzfarbwert, den voreingestellten Standardfarbinformationen und den bestimmten Informationen zur Farbverteilung der Regionen der Hand (1) durch Berechnen unter Verwendung von folgenden Formeln durchgeführt wird:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

wobei, *U'(x, y)* ein modifizierter Rotton-Ausgabeparameter ist; *V'(x,y)* ein modifizierter Blauton-Ausgabeparameter ist; *U(x, y)* eine Rotton-Information in den Informationen zur Farbverteilung der Regionen der Hand (1) ist; $V(x, y)$ eine Blauton-Information in den Informationen zur Farbverteilung der Regionen der Hand (1) ist; $U_s$ eine Rotton-Information in den voreingestellten Standard-Farbinformationen ist; $U_0$ ein Rotton-Wert in dem bestimmten Referenz-Farbwert ist; $V_s$ eine Blauton-Information in den voreingestellten Standard-Farbinformationen ist; und $V_0$ ein Blauton-Wert in dem bestimmten Referenz-Farbwert ist; und
Bestimmen der modifizierten Helligkeitsausgabeparameter gemäß den Helligkeitskorrekturfaktoren der Regionen und der bestimmten Informationen zur Helligkeitsverteilung der Regionen der Hand (1) durchgeführt durch Berechnen unter Verwendung von Formeln wie folgt:

$$Y' = Y * \partial$$

$$\partial = \left(\operatorname{atan}\frac{h * \tan\theta_0 - \frac{L}{N} * (\frac{N}{2} - i)}{h} - \operatorname{atan}\frac{h * \tan\theta_0 - \frac{L}{N} * (\frac{N}{2} - i + 1)}{h}\right) / (\varphi / N)$$

wobei $Y'$ der modifizierte Helligkeitsausgabeparameter ist; $Y$ die Informationen zur Helligkeitsverteilung der Regionen der Hand (1) sind; $\partial$ der Helligkeitskorrekturfaktor ist; $h$ ein Abstand von einem Zentrum einer Lichtaustrittsfläche der Projektionsvorrichtung (2) auf die Hand (1) ist; $\varphi$ ein Lichtaustrittswinkel der Lichtaustrittsfläche der Projektionsvorrichtung (2) ist; $\theta_0$ ein Winkel zwischen einer Mittenlinie des Lichtaustrittswinkels der Lichtaustrittsfläche der Projektionsvorrichtung (2) und der Hand (1) ist; $L$ eine Länge einer Projektionsregion auf der Hand (1) der Projektionsvorrichtung (2) von einem Ende nahe der Projektionsvorrichtung (2) bis zu einem Ende weg von der Projektionsvorrichtung (2) ist; $N$ eine Gesamtzahl von Pixelzeilen der Projektionsregion auf der Hand (1) der Projektionsvorrichtung (2) in einer Richtung von dem Ende nahe der Projektionsvorrichtung (2) zu dem Ende weg von der Projektionsvorrichtung (2) ist; $i$ eine Zeilenzahl eines bestimmten Pixels in der Projektionsregion auf der Hand (1) der Projektionsvorrichtung (2) in der Richtung von dem Ende nahe der Projektionsvorrichtung (2) zu dem Ende weg von der Projektionsvorrichtung (2) ist.

**5.** Projektionsverfahren gemäß Anspruch 4, wobei das Erfassen von Informationen zur Farbverteilung und Informationen zur Helligkeitsverteilung von Regionen einer Hand (1) aufweist:

Erfassen von RGB-Musterinformationen der Regionen der Hand (1);
Erfassen der Informationen zur Farbverteilung und der Informationen zur Helligkeitsverteilung der Regionen der Hand (1) gemäß den erfassten RGB-Musterinformationen der Regionen der Hand (1).

**6.** Projektionsverfahren gemäß Anspruch 4, wobei der Referenzfarbwert ein Durchschnittswert von Farbinformationen aller Farben in einer Zentralregion der Hand (1) ist.

**7.** Tragbare Projektionsvorrichtung (2) mit:

einer Erfassungsvorrichtung, die konfiguriert ist, Musterinformationen von einer Vielzahl von Regionen einer Hand (1) zu erfassen;
einer Verarbeitungseinheit, die konfiguriert ist, in einer Signalverbindung mit der Erfassungsvorrichtung zu stehen und Informationen zur Farbverteilung und Informationen zur Helligkeitsverteilung der Regionen der Hand gemäß den Musterinformationen der Regionen der Hand (1), die durch die Erfassungsvorrichtung erfasst wurden, zu erfassen, einen Referenzfarbwert gemäß den erfassten Informationen zur Farbverteilung der Regionen der Hand zu bestimmen, modifizierte Farbausgabeparameter gemäß dem bestimmten Referenzfarbwert, den erfassten Informationen zur Farbverteilung der Regionen der Hand (1) und den voreingestellten Standard-Farbinformationen zu bestimmen, Helligkeitskorrekturfaktoren der Regionen der Hand gemäß den erfassten Informationen zur Helligkeitsverteilung der Regionen der Hand zu bestimmen, und modifizierte Helligkeitsausgabeparameter gemäß den Helligkeitskorrekturfaktoren und den erfassten Informationen zur Helligkeitsverteilung der Regionen der Hand (1) zu bestimmen;
ein Projektionsmodul, das konfiguriert ist, ein Bild gemäß den bestimmten Farbausgabeparametern und den bestimmten Helligkeitsausgabeparametern auszugeben,
wobei
Bestimmen der modifizierten Farbausgabeparametern gemäß dem bestimmten Referenzfarbwert, den voreingestellten Standard-Farbinformationen und den bestimmten Informationen zur Farbverteilung der Regionen der Hand (1) durch Berechnen unter Verwendung von folgenden Formeln durchgeführt wird:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

wobei, *U'(x, y)* ein modifizierter Rotton-Ausgabeparameter ist; *V'(x,y)* ein modifizierter Blauton-Ausgabeparameter ist; *U(x, y)* eine Rotton-Information in den Informationen zur Farbverteilung der Regionen der Hand (1) ist; *V(x, y)* eine Blauton-Information in den Informationen zur Farbverteilung der Regionen der Hand (1) ist; $U_s$ eine Rotton-Information in den voreingestellten Standard-Farbinformationen ist; $U_0$ ein Rotton-Wert in dem bestimmten Referenz-Farbwert ist; $V_s$ eine Blauton-Information in den voreingestellten Standard-Farbinformationen ist; und $V_0$ ein Blauton-Wert in dem bestimmten Referenz-Farbwert ist; und
Bestimmen der modifizierten Helligkeitsausgabeparameter gemäß den Helligkeitskorrekturfaktoren der Regionen und den bestimmten Informationen zur Helligkeitsverteilung der Regionen der Hand (1) durch Berechnen unter Verwendung von folgenden Formeln durchgeführt wird:

$$Hand(x,y) = Y(x,y) / Y(\max)$$

$$Y'(x,y) = Y(x,y) \times Hand(x,y)$$

wobei *Y'(x, y)* der modifizierte Helligkeitsausgabeparameter ist; *Y(x, y)* die Informationen zur Helligkeitsverteilung der Regionen der Hand (1) sind; *Hand(x, y)* der Helligkeitskorrekturfaktor ist; und *Y(max)* ein höchster Helligkeitswert in den Informationen zur Helligkeitsverteilung der Regionen der Hand (1) ist.

**8.** Tragbare Projektionsvorrichtung (2) gemäß Anspruch 7, wobei die Erfassungsvorrichtung eine RGB-Kamera ist, die eine Lichtsammelrichtung parallel zu einer Lichtaustrittsrichtung des Projektionsmoduls aufweist.

**9.** Tragbare Projektionsvorrichtung (2) mit:

eine Erfassungsvorrichtung, die konfiguriert ist, Musterinformationen einer Vielzahl von Regionen einer Hand (1) zu erfassen;
eine Verarbeitungseinheit, die konfiguriert ist, in Signalverbindung mit der Erfassungsvorrichtung zu stehen und Informationen zur Farbverteilung und Informationen zur Helligkeitsverteilung der Regionen der Hand (1) gemäß den Musterinformationen der Regionen der Hand (1), die durch die Erfassungsvorrichtung erfasst wurden, zu erfassen, einen Referenzfarbwert gemäß den erfassten Informationen zur Farbverteilung der Regionen der Hand zu bestimmen, modifizierte Farbausgabeparameter gemäß dem erfassten Referenzfarbwert, den erfassten Informationen zur Farbverteilung der Regionen der Hand (1) und den voreingestellten Standardfarbinformationen zu bestimmen, Helligkeitskorrekturfaktoren der Regionen der Hand gemäß den erfassten Informationen zur Helligkeitsverteilung der Regionen der Hand zu bestimmen und modifizierte Helligkeitsausgabeparameter gemäß den Helligkeitskorrekturfaktoren und den erfassten Informationen zur Helligkeitsverteilung der Regionen der Hand (1) zu bestimmen;
ein Projektionsmodul, das konfiguriert ist, ein Bild gemäß den erfassten Farbausgabeparametern und den erfassten Helligkeitsausgabeparametern auszugeben,
wobei
Bestimmen der modifizierten Farbausgabeparameter gemäß dem bestimmten Referenzfarbwert, den voreingestellten Standardfarbinformationen und den bestimmten Informationen zur Farbverteilung der Regionen der Hand (1) durch Berechnen unter Verwendung von folgenden Formeln durchgeführt wird:

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

wobei, *U'(x, y)* ein modifizierter Rotton-Ausgabeparameter ist; *V'(x,y)* ein modifizierter Blauton-Ausgabeparameter ist; *U(x, y)* eine Rotton-Information in den Informationen zur Farbverteilung der Regionen der Hand (1) ist; *V(x, y)* eine Blauton-Information in den Informationen zur Farbverteilung der Regionen der Hand (1) ist; $U_s$ eine Rotton-Information in den voreingestellten Standard-Farbinformationen ist; $U_0$ ein Rotton-Wert in dem bestimmten Referenz-Farbwert ist; $V_s$ eine Blauton-Information in den voreingestellten Standard-Farbinformationen ist; und $V_0$ ein Blauton-Wert in dem bestimmten Referenz-Farbwert ist; und

Bestimmen der modifizierten Helligkeitsausgabeparameter gemäß den Helligkeitskorrekturfaktoren der Regionen und der bestimmten Informationen zur Helligkeitsverteilung der Regionen der Hand (1) durchgeführt durch Berechnen unter Verwendung von Formeln wie folgt:

$$Y' = Y * \partial$$

$$\partial = (\text{atan}\frac{h * \tan\theta_0 - \frac{L}{N} * (\frac{N}{2} - i)}{h} - \text{atan}\frac{h * \tan\theta_0 - \frac{L}{N} * (\frac{N}{2} - i + 1)}{h}) / (\varphi / N)$$

wobei *Y'* der modifizierte Helligkeitsausgabeparameter ist; *Y* die Informationen zur Helligkeitsverteilung der Regionen der Hand (1) sind; $\partial$ der Helligkeitskorrekturfaktor ist; *h* ein Abstand von einem Zentrum einer Lichtaustrittsfläche der Projektionsvorrichtung (2) auf die Hand (1) ist; $\varphi$ ein Lichtaustrittswinkel der Lichtaustrittsfläche der Projektionsvorrichtung (2) ist; $\theta_0$ ein Winkel zwischen einer Mittenlinie des Lichtaustrittswinkels der Lichtaustrittsfläche der Projektionsvorrichtung (2) und der Hand (1) ist; *L* eine Länge einer Projektionsregion auf der Hand (1) der Projektionsvorrichtung (2) von einem Ende nahe der Projektionsvorrichtung (2) bis zu einem Ende weg von der Projektionsvorrichtung (2) ist; *N* eine Gesamtzahl von Pixelzeilen der Projektionsregion auf der Hand (1) der Projektionsvorrichtung (2) in einer Richtung von dem Ende nahe der Projektionsvorrichtung (2) zu dem Ende weg von der Projektionsvorrichtung (2) ist; *i* eine Zeilenzahl eines bestimmten Pixels in der Projektionsregion auf der Hand (1) der Projektionsvorrichtung (2) in der Richtung von dem Ende nahe der Projektionsvorrichtung (2) zu dem Ende weg von der Projektionsvorrichtung (2) ist.

**10.** Tragbare Projektionsvorrichtung (2) gemäß Anspruch 9, wobei die Erfassungsvorrichtung eine RGB-Kamera ist, die eine Lichtsammelrichtung parallel zu einer Licht-Austrittsrichtung des Projektionsmoduls aufweist.

## Revendications

**1.** Procédé de projection d'un appareil de projection portable (2), comprenant :

(S201) l'acquisition d'une information de distribution de couleurs et d'une information de distribution de luminosité d'une pluralité de régions d'une main (1) ;

(S202) la détermination d'une valeur de couleur de référence en fonction de l'information de distribution de couleurs acquise des régions de la main, la détermination de paramètres de sortie de couleur modifiés en fonction de la valeur de couleur de référence déterminée, de l'information de distribution de couleurs acquise des régions de la main (1) et d'une information de couleur standard prédéfinie, la détermination de facteurs de correction de luminosité des régions de la main en fonction de l'information de distribution de luminosité acquise des régions de la main et la détermination de paramètres de sortie de luminosité modifiés en fonction des facteurs de correction de luminosité et de l'information de distribution de luminosité acquise des régions de la main (1) ; et

(S203) la commande d'un module de projection pour émettre en sortie une image en fonction des paramètres de sortie de couleur déterminés et des paramètres de sortie de luminosité déterminés ; dans lequel :

la détermination des paramètres de sortie de couleur modifiés en fonction de la valeur de couleur de référence déterminée, de l'information de couleur standard prédéfinie et de l'information de distribution de couleurs déterminée des régions de la main (1) est réalisée par calcul en utilisant les formules qui suivent :

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

dans lesquelles *U'(x, y)* est un paramètre de sortie de ton de rouge modifié ; *V'(x, y)* est un paramètre de sortie de ton de bleu modifié ; *U(x, y)* est une information de ton de rouge dans l'information de distribution de couleurs des régions de la main (1) ; *V(x, y)* est une information de ton de bleu dans l'information de distribution de couleurs des régions de la main (1) ; $U_S$ est une information de ton de rouge dans l'information de couleur standard prédéfinie ; $U_0$ est une valeur de ton de rouge dans la valeur de couleur de référence déterminée ; $V_s$ est une information de ton de bleu dans l'information de couleur standard prédéfinie ; et $V_0$ est une valeur de ton de bleu dans la valeur de couleur de référence déterminée ; et

la détermination des paramètres de sortie de luminosité modifiés en fonction des facteurs de correction de luminosité des régions et de l'information de distribution de luminosité déterminée des régions de la main (1) est réalisée par calcul en utilisant les formules qui suivent :

$$Hand(x,y) = Y(x,y) / Y(\max)$$

$$Y'(x,y) = Y(x,y) \times Hand(x,y)$$

dans lesquelles *Y'(x, y)* est le paramètre de sortie de luminosité modifié ; *Y(x, y)* est l'information de distribution de luminosité des régions de la main (1) ; *Hand(x, y)* est le facteur de correction de luminosité ; et *Y(max)* est une valeur de luminosité la plus élevée dans l'information de distribution de luminosité des régions de la main (1).

**2.** Procédé de projection selon la revendication 1, dans lequel l'acquisition d'une information de distribution de couleurs et d'une information de distribution de luminosité des régions d'une main (1) comprend :

l'acquisition d'une information de motif de RGB des régions de la main (1) ; et

la détermination de l'information de distribution de couleurs et de l'information de distribution de luminosité des régions de la main (1) en fonction de l'information de motif de RGB acquise des régions de la main (1).

**3.** Procédé de projection selon la revendication 1, dans lequel la valeur de couleur de référence est une valeur moyenne d'une information de couleur de toutes les couleurs dans une région centrale de la main (1).

**4.** Procédé de projection d'un appareil de projection portable (2), comprenant :

(S201) l'acquisition d'une information de distribution de couleurs et d'une information de distribution de luminosité d'une pluralité de régions d'une main (1) ;

(S202) la détermination d'une valeur de couleur de référence en fonction de l'information de distribution de couleurs acquise des régions de la main, la détermination de paramètres de sortie de couleur modifiés en fonction de la valeur de couleur de référence déterminée, de l'information de distribution de couleurs acquise des régions de la main (1) et d'une information de couleur standard prédéfinie, la détermination de facteurs de correction de luminosité des régions de la main en fonction de l'information de distribution de luminosité acquise des régions de la main et la détermination de paramètres de sortie de luminosité modifiés en fonction des facteurs de correction de luminosité et de l'information de distribution de luminosité acquise des régions de la main (1) ; et
(S203) la commande d'un module de projection pour émettre en sortie une image en fonction des paramètres de sortie de couleur déterminés et des paramètres de sortie de luminosité déterminés ; dans lequel :

la détermination des paramètres de sortie de couleur modifiés en fonction de la valeur de couleur de référence déterminée, de l'information de couleur standard prédéfinie et de l'information de distribution de couleurs déterminée des régions de la main (1) est réalisée par calcul en utilisant les formules qui suivent :

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

dans lesquelles *U'(x, y)* est un paramètre de sortie de ton de rouge modifié ; *V'(x, y)* est un paramètre de sortie de ton de bleu modifié ; *U(x, y)* est une information de ton de rouge dans l'information de distribution de couleurs des régions de la main (1) ; *V(x, y)* est une information de ton de bleu dans l'information de distribution de couleurs des régions de la main (1) ; $U_s$ est une information de ton de rouge dans l'information de couleur standard prédéfinie ; $U_0$ est une valeur de ton de rouge dans la valeur de couleur de référence déterminée ; $V_s$ est une information de ton de bleu dans l'information de couleur standard prédéfinie ; et $V_0$ est une valeur de ton de bleu dans la valeur de couleur de référence déterminée ; et
la détermination des paramètres de sortie de luminosité modifiés en fonction des facteurs de correction de luminosité des régions et de l'information de distribution de luminosité déterminée des régions de la main (1) est réalisée par calcul en utilisant les formules qui suivent :

$$Y' = Y * \partial$$

$$\partial = \left(\text{atan}\frac{h * \tan\theta_0 - \frac{L}{N} * (\frac{N}{2} - i)}{h} - \text{atan}\frac{h * \tan\theta_0 - \frac{L}{N} * (\frac{N}{2} - i + 1)}{h}\right) / (\varphi / N)$$

dans lesquelles Y' est les paramètres de sortie de luminosité modifiés ; *Y* est l'information de distribution de luminosité des régions de la main (1) ; $\partial$ est le facteur de correction de luminosité ; *h* est une distance depuis un centre d'une surface de sortie de lumière de l'appareil de projection (2) jusqu'à la main (1) ; $\varphi$ est un angle de sortie de lumière de la surface de sortie de lumière de l'appareil de projection (2) ; $\theta_0$ est un angle entre une ligne centrale de l'angle de sortie de lumière de la surface de sortie de lumière de l'appareil de projection (2) et la main (1) ; *L* est une longueur d'une région de projection sur la main (1) de l'appareil de projection (2) depuis une extrémité proche de l'appareil de projection (2) jusqu'à une extrémité à distance de l'appareil de projection (2) ; *N* est un nombre total de rangées de pixels de la région de projection sur la main (1) de l'appareil de projection (2) dans une direction depuis l'extrémité proche de l'appareil de projection (2) jusqu'à l'extrémité à distance de l'appareil de projection (2) ; et *i* est un numéro de rangée d'un certain pixel dans la région de projection sur la main (1) de l'appareil de projection (2) dans la direction qui va de l'extrémité proche de l'appareil de projection (2) jusqu'à l'extrémité à distance de l'appareil de projection (2).

**5.** Procédé de projection selon la revendication 4, dans lequel l'acquisition d'une information de distribution de couleurs et d'une information de distribution de luminosité des régions d'une main (1) comprend :

l'acquisition d'une information de motif de RGB des régions de la main (1) ; et
la détermination de l'information de distribution de couleurs et de l'information de distribution de luminosité des régions de la main (1) en fonction de l'information de motif de RGB acquise des régions de la main (1).

**6.** Procédé de projection selon la revendication 4, dans lequel la valeur de couleur de référence est une valeur moyenne d'une information de couleur de toutes les couleurs dans une région centrale de la main (1).

**7.** Appareil de projection portable (2), comprenant :

un dispositif d'acquisition qui est configuré pour acquérir une information de motif d'une pluralité de régions d'une main (1) ;
une unité de traitement qui est configurée pour être en connexion en termes de signaux avec le dispositif d'acquisition et pour acquérir une information de distribution de couleurs et une information de distribution de luminosité des régions de la main en fonction de l'information de motif des régions de la main (1) qui est acquise par le dispositif d'acquisition, pour déterminer une valeur de couleur de référence en fonction de l'information de distribution de couleurs acquise des régions de la main, pour déterminer des paramètres de sortie de couleur modifiés en fonction de la valeur de couleur de référence déterminée, de l'information de distribution de couleurs acquise des régions de la main (1) et de l'information de couleur standard prédéfinie, pour déterminer des facteurs de correction de luminosité des régions de la main en fonction de l'information de distribution de luminosité acquise des régions de la main et pour déterminer des paramètres de sortie de luminosité modifiés en fonction des facteurs de correction de luminosité et de l'information de distribution de luminosité acquise des régions de la main (1) ; et
un module de projection qui est configuré pour émettre en sortie une image en fonction des paramètres de sortie de couleur déterminés et des paramètres de sortie de luminosité déterminés ; dans lequel :
la détermination des paramètres de sortie de couleur modifiés en fonction de la valeur de couleur de référence déterminée, de l'information de couleur standard prédéfinie et de l'information de distribution de couleurs déterminée des régions de la main (1) est réalisée par calcul en utilisant les formules qui suivent :

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

dans lesquelles :

*U'(x, y)* est un paramètre de sortie de ton de rouge modifié ; *V'(x, y)* est un paramètre de sortie de ton de bleu modifié ; *U(x, y)* est une information de ton de rouge dans l'information de distribution de couleurs des régions de la main ; *V(x, y)* est une information de ton de bleu dans l'information de distribution de couleurs des régions de la main ; $U_s$ est une information de ton de rouge dans l'information de couleur standard prédéfinie ; $U_0$ est une valeur de ton de rouge dans la valeur de couleur de référence déterminée ; $V_s$ est une information de ton de bleu dans l'information de couleur standard prédéfinie ; et $V_0$ est une valeur de ton de bleu dans la valeur de couleur de référence déterminée ; et
la détermination des paramètres de sortie de luminosité modifiés en fonction des facteurs de correction de luminosité des régions et de l'information de distribution de luminosité déterminée des régions de la main est réalisée par calcul en utilisant les formules qui suivent :

$$Hand(x,y) = Y(x,y) / Y(\max)$$

$$Y'(x,y) = Y(x,y) \times Hand(x,y)$$

dans lesquelles *Y'(x, y)* est le paramètre de sortie de luminosité modifié ; *Y(x, y)* est l'information de distribution de luminosité des régions de la main (1) ; *Hand(x, y)* est le facteur de correction de luminosité ; et *Y(max)* est une valeur de luminosité la plus élevée dans l'information de distribution de luminosité des régions de la main (1).

**8.** Appareil de projection portable (2) selon la revendication 7, dans lequel le dispositif d'acquisition est une caméra RGB qui présente une direction de collecte de la lumière qui est parallèle à une direction de sortie de la lumière du module de projection.

**9.** Appareil de projection portable (2), comprenant :

un dispositif d'acquisition qui est configuré pour acquérir une information de motif d'une pluralité de régions d'une main (1) ;
une unité de traitement qui est configurée pour être en connexion en termes de signaux avec le dispositif d'acquisition et pour acquérir une information de distribution de couleurs et une information de distribution de luminosité des régions de la main (1) en fonction de l'information de motif des régions de la main (1) qui est acquise par le dispositif d'acquisition, pour déterminer une valeur de couleur de référence en fonction de l'information de distribution de couleurs acquise des régions de la main, pour déterminer des paramètres de sortie de couleur modifiés en fonction de la valeur de couleur de référence déterminée, de l'information de distribution de couleurs acquise des régions de la main (1) et de l'information de couleur standard prédéfinie, pour déterminer des facteurs de correction de luminosité des régions de la main en fonction de l'information de distribution de luminosité acquise des régions de la main et pour déterminer des paramètres de sortie de luminosité modifiés en fonction des facteurs de correction de luminosité et de l'information de distribution de luminosité acquise des régions de la main (1) ; et
un module de projection qui est configuré pour émettre en sortie une image en fonction des paramètres de sortie de couleur déterminés et des paramètres de sortie de luminosité déterminés ; dans lequel :

la détermination des paramètres de sortie de couleur modifiés en fonction de la valeur de couleur de référence déterminée, de l'information de couleur standard prédéfinie et de l'information de distribution de couleurs déterminée des régions de la main (1) est réalisée par calcul en utilisant les formules qui suivent :

$$\begin{cases} \Delta U = U_s - U_0 \\ \Delta V = V_s - V_0 \end{cases}$$

$$\begin{cases} U'(x,y) = U(x,y) + \Delta U \\ V'(x,y) = V(x,y) + \Delta V \end{cases}$$

dans lesquelles :

*U'(x, y)* est un paramètre de sortie de ton de rouge modifié ; *V'(x, y)* est un paramètre de sortie de ton de bleu modifié ; *U(x, y)* est une information de ton de rouge dans l'information de distribution de couleurs des régions de la main (1) ; *V(x, y)* est une information de ton de bleu dans l'information de distribution de couleurs des régions de la main (1) ; $U_s$ est une information de ton de rouge dans l'information de couleur standard prédéfinie ; $U_0$ est une valeur de ton de rouge dans la valeur de couleur de référence déterminée ; $V_s$ est une information de ton de bleu dans l'information de couleur standard prédéfinie ; et $V_0$ est une valeur de ton de bleu dans la valeur de couleur de référence déterminée ; et
la détermination des paramètres de sortie de luminosité modifiés en fonction des facteurs de correction de luminosité des régions et de l'information de distribution de luminosité déterminée des régions de la main (1) est réalisée par calcul en utilisant les formules qui suivent :

$$Y' = Y * \partial$$

$$\partial = \left(\operatorname{atan}\frac{h * \tan\theta_0 - \frac{L}{N} * (\frac{N}{2} - i)}{h} - \operatorname{atan}\frac{h * \tan\theta_0 - \frac{L}{N} * (\frac{N}{2} - i + 1)}{h}\right) / (\varphi / N)$$

dans lesquelles *Y'* est les paramètres de sortie de luminosité modifiés ; *Y* est l'information de distribution de luminosité des régions de la main (1) ; $\partial$ est le facteur de correction de luminosité ; *h* est une distance depuis un centre d'une surface de sortie de lumière de l'appareil de projection (2) jusqu'à la main (1) ; $\varphi$ est un angle de sortie de lumière de la surface de sortie de lumière de l'appareil de projection (2) ; $\theta_0$ est un angle entre une ligne centrale de l'angle de sortie de lumière de la surface de sortie de lumière de l'appareil de projection (2) et la main (1) ; *L* est une longueur d'une région de projection sur la main (1) de l'appareil de projection (2) depuis une extrémité proche de l'appareil de projection (2) jusqu'à une extrémité à distance de l'appareil de projection (2) ; *N* est un nombre total de rangées de pixels de la région de projection sur la main (1) de l'appareil de projection (2) dans une direction depuis l'extrémité proche de l'appareil de projection (2) jusqu'à l'extrémité à distance de l'appareil de projection (2) ; et *i* est un numéro de rangée d'un certain pixel dans la région de projection sur la main (1) de l'appareil de projection (2) dans la direction qui va de l'extrémité proche de l'appareil de projection (2) jusqu'à l'extrémité à distance de l'appareil de projection (2).

**10.** Appareil de projection portable (2) selon la revendication 9, dans lequel le dispositif d'acquisition est une caméra RGB qui présente une direction de collecte de la lumière qui est parallèle à une direction de sortie de la lumière du module de projection.

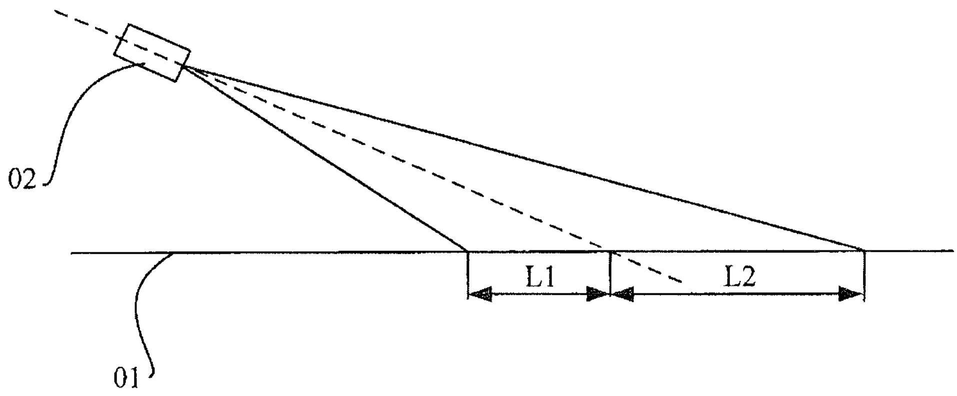


Fig. 1

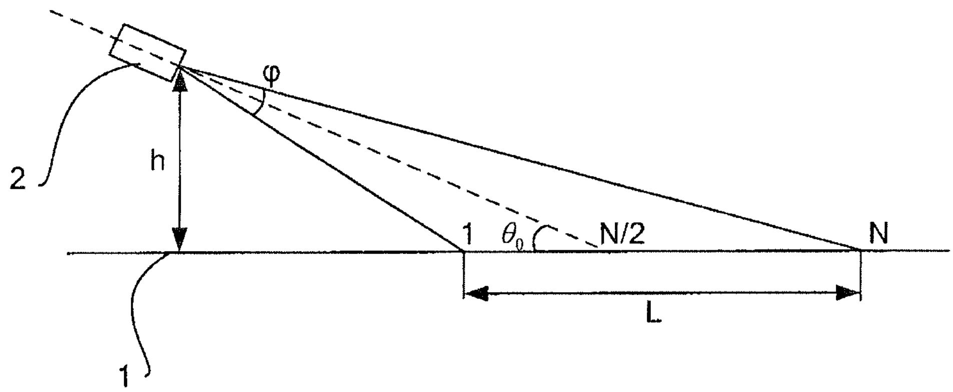


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2009295712 A1
- US 2004140982 A1
- US 2002024640 A1
- US 2013086531 A1